# EUROPÄISCHE PATENTANMELDUNG

(11) **EP 3 173 815 A1**
(43) Veröffentlichungstag der Anmeldung: **31.05.2017**
(21) Anmeldenummer: 16195764.2
(22) Anmeldetag: 26.10.2016
(51) Int. Cl.: G01S 17/42, G01S 7/481, G01S 7/497, G01S 17/93, G01D 5/34

(54) **ANTRIEBSEINRICHTUNG ZUM ANTREIBEN WENIGSTENS EINES SPIEGELS EINE UMLENKSPIEGELANORDNUNG, OPTISCHE MESSVORRICHTUNG, FAHRERASSISTENZSYSTEM, VERFAHREN ZUM BETREIBEN EINER OPTISCHEN MESSVORRICHTUNG**

(30) Priorität: 25.11.2015 DE 102015120399
(71) Anmelder: Valeo Schalter und Sensoren GmbH, 74321 Bietigheim-Bissingen (DE)
(72) Erfinder: Popescu, Sorin, 74321 Bietigheim-Bissingen (DE); Horvath, Peter, 74321 Bietigheim-Bissingen (DE)

(57) **Zusammenfassung**

Es werden eine Antriebseinrichtung (48) zum Antreiben wenigstens eines Spiegels (42) einer Umlenkspiegelanordnung (28) einer optischen Messvorrichtung (14) eines Fahrzeugs (10) um eine gedachte Drehachse (46) relativ zu einem stationären Teil der Messvorrichtung (14), eine optische Messvorrichtung (14), ein Fahrerassistenzsystem (12) und ein Verfahren zum Betreiben einer optischen Messvorrichtung (14) beschrieben. Die Antriebseinrichtung (48) weist einen elektrischen Rotationsmotor (50) und wenigstens einen Drehwinkelgeber (52) zur Bestimmung wenigstens einer Winkelstellung des wenigstens einen Spiegels (42) bezüglich der Drehachse (46) auf. Der wenigstens eine Drehwinkelgeber (52) weist wenigstens eine Winkelmarke (70, 72) und wenigstens einen dazu passenden Sensor (74) auf. Die wenigstens eine Winkelmarke (70, 72) ist mit einem mit dem Rotationsmotor (50) drehbaren Teil (60) der Messvorrichtung (14) und der wenigstens eine Sensor (74) ist mit einem stationären Teil (44, 54, 56) der Messvorrichtung (14) verbunden oder umgekehrt. Wenigstens eine Winkelmarke (70, 72) und/oder wenigstens ein Sensor ist an einem Läufer (60) des Rotationsmotors (50) angeordnet.

## Beschreibung

### Technisches Gebiet

Die Erfindung betrifft eine Antriebseinrichtung zum Antreiben wenigstens eines Spiegels einer Umlenkspiegelanordnung einer optischen Messvorrichtung eines Fahrzeugs um eine gedachte Drehachse relativ zu einem stationären Teil der Messvorrichtung, wobei die Antriebseinrichtung einen elektrischen Rotationsmotor und wenigstens einen Drehwinkelgeber zur Bestimmung wenigstens einer Winkelstellung des wenigstens einen Spiegels bezüglich der Drehachse aufweist, wobei der wenigstens eine Drehwinkelgeber wenigstens eine Winkelmarke und wenigstens einen dazu passenden Sensor aufweist, wobei die wenigstens eine Winkelmarke mit einem mit dem Rotationsmotor drehbaren Teil der Messvorrichtung und der wenigstens eine Sensor mit einem stationären Teil der Messvorrichtung verbunden ist oder umgekehrt.

Ferner betrifft die Erfindung eine optische Messvorrichtung eines Fahrzeugs mit wenigstens einer Antriebseinrichtung zum Antreiben wenigstens eines Spiegels einer Umlenkspiegelanordnung der Messvorrichtung um eine gedachte Drehachse relativ zu einem stationären Teil der Messvorrichtung, wobei die Antriebseinrichtung einen elektrischen Rotationsmotor und wenigstens einen Drehwinkelgeber zur Bestimmung wenigstens einer Winkelstellung des wenigstens einen Spiegels bezüglich der Drehachse aufweist, wobei der wenigstens eine Drehwinkelgeber wenigstens eine Winkelmarke und wenigstens einen dazu passenden Sensor aufweist, wobei die wenigstens eine Winkelmarke mit einem mit dem Rotationsmotor drehbaren Teil der Messvorrichtung und der wenigstens eine Sensor mit einem stationären Teil der Messvorrichtung verbunden ist oder umgekehrt.

Außerdem betrifft die Erfindung ein Fahrerassistenzsystem eines Fahrzeugs, mit wenigstens einer optischen Messvorrichtung und wenigstens einer Steuereinrichtung zum Steuern wenigstens eines Fahr-Funktionssystems des Fahrzeugs abhängig wenigstens von Informationen der wenigstens einen Messvorrichtung, wobei die wenigstens eine Messvorrichtung wenigstens eine Antriebseinrichtung zum Antreiben wenigstens eines Spiegels einer Umlenkspiegelanordnung der Messvorrichtung um eine gedachte Drehachse relativ zu einem stationären Teil der Messvorrichtung aufweist, wobei die Antriebseinrichtung einen elektrischen Rotationsmotor und wenigstens einen Drehwinkelgeber zur Bestimmung wenigstens einer Winkelstellung des wenigstens einen Spiegels bezüglich der Drehachse aufweist, wobei der wenigstens eine Drehwinkelgeber wenigstens eine Winkelmarke und wenigstens einen dazu passenden Sensor aufweist, wobei die wenigstens eine Winkelmarke mit einem mit dem Rotationsmotor drehbaren Teil der Messvorrichtung und der wenigstens eine Sensor mit einem stationären Teil der Messvorrichtung verbunden ist oder umgekehrt.

Des Weiteren betrifft die Erfindung ein Verfahren zum Betreiben einer optischen Messvorrichtung eines Fahrzeugs, bei dem mit wenigstens einem Sender wenigstens ein Sendestrahl über wenigstens einen Spiegel einer Umlenkspiegelanordnung in einen Überwachungsbereich der Messvorrichtung gesendet wird, wenigstens ein Sendestrahl von einem in dem Überwachungsbereich befindlichen Objekt oder Hindernis reflektiert und als wenigstens ein Empfangsstrahl über denselben oder wenigstens einen anderen Spiegel der Umlenkspiegelanordnung zu einem Empfänger gesendet wird, wobei vor, während und/oder nach dem Senden des wenigstens einen Sendestrahls und/oder nach dem Empfangen wenigstens einen Empfangsstrahls wenigstens einer der Spiegel mittels einem Läufer eines Rotationsmotors um eine gedachte Drehachse relativ zu einem stationären Teil der Messvorrichtung gedreht wird und vor, nach und/oder während dem Drehvorgang mit wenigstens einem Drehwinkelgeber wenigstens eine Winkelstellung des wenigstens einen Spiegels bezüglich der Drehachse ermittelt wird.

### Stand der Technik

Aus der DE 10 2010 047 984 A1 ist eine Umlenkspiegelanordnung für eine optische Messvorrichtung mit mindestens einer Spiegeleinheit, welche auf einer drehbaren Achse angeordnet ist, und mindestens einen Umlenkspiegel umfasst, und einer Antriebseinheit, welche die drehbare Achse antreibt, sowie eine optische Messvorrichtung mit einer solchen Umlenkspiegelanordnung bekannt. Die Umlenkspiegelanordnung umfasst eine Sendespiegeleinheit mit zwei Sendeumlenkspiegeln und eine Empfangsspiegeleinheit mit zwei Empfangsumlenkspiegeln. Zwischen der Sendespiegeleinheit und der Empfangsspiegeleinheit ist unterhalb einer Trägerplatte eine Codierscheibe angeordnet, welche zur Bestimmung des Drehwinkels der drehbaren Achse ausgewertet wird.

Der Erfindung liegt die Aufgabe zugrunde, eine Antriebseinrichtung, eine optische Messvorrichtung, ein Fahrerassistenzsystem und ein Verfahren zum Betreiben einer optischen Messvorrichtung der eingangs benannten Art zu gestalten, bei denen eine Genauigkeit und/oder Reproduzierbarkeit der Erfassung wenigstens einer Winkelstellung wenigstens eines Spiegels verbessert werden kann.

### Offenbarung der Erfindung

Diese Aufgabe wird erfindungsgemäß dadurch gelöst, dass wenigstens eine Winkelmarke und/oder wenigstens ein Sensor an einem Läufer des Rotationsmotors angeordnet ist.

Erfindungsgemäß ist wenigstens eine Winkelmarke und/oder wenigstens ein Sensor an dem Läufer des Rotationsmotors angeordnet. Im Unterschied zu der aus dem Stand der Technik bekannten Umlenkspiegelanordnung ist die wenigstens eine Winkelmarke und/oder der wenigstens eine Sensor nicht an dem wenigstens einen Spiegel oder einer Spiegeleinheit angeordnet. Auf diese Weise kann die Winkelstellung des Läufers direkt ermittelt werden. Über die Winkelstellung des Läufers kann die Winkelstellung des wenigstens einen Spiegels bestimmt werden. Mit dem Drehwinkelgeber kann so ein momentaner Drehwinkel des wenigstens einen Spiegels bezüglich der Drehachse einfach, genau und reproduzierbar ermittelt werden.

Durch die Verbindung wenigstens einer Winkelmarke und/oder wenigstens eines Sensors mit dem Läufer des Rotationsmotors können Toleranzen zwischen der mit dem wenigstens einen Drehwinkelgeber erfassten Winkelstellung und der tatsächlichen Winkelstellung des Läufers verringert werden. Derartige Toleranzen können bauteilbedingt und/oder betriebsbedingt sein. Insbesondere können Toleranzen in Bezug auf eine Exzentrizität der wenigstens einen Winkelmarke und/oder des wenigstens einen Sensors in Bezug auf die Drehachse kompensiert werden. Da die wenigstens eine Winkelmarke und/oder der wenigstens eine Sensor nicht über den wenigstens einen Spiegel oder eine Spiegeleinheit oder dergleichen mit dem Läufer verbunden ist, können Toleranzen bedingt durch zwischengeschaltete Bauteile verringert werden. Die Genauigkeit der Bestimmung der wenigstens einen Winkelstellung kann so verbessert werden.

Außerdem kann durch die Anordnung der wenigstens einen Winkelmarke und/oder des wenigstens einen Sensors an dem Läufer eine Anfälligkeit des Drehwinkelgebers insbesondere in Bezug auf betriebsbedingte, insbesondere mechanische und/oder temperaturbedingte, Belastungen verringert werden. Die Robustheit der Antriebseinrichtung und damit der optischen Messvorrichtung kann somit verbessert werden.

Ferner kann wenigstens eine Winkelmarke und/oder wenigstens ein Sensor platzsparend am Läufer angeordnet werden. So kann ein erfindungsgemäßer Drehwinkelgeber einfach und/oder kompakt aufgebaut sein. Ein entsprechender Bauraum und entsprechende Abmessungen der Antriebseinrichtung können so verringert werden. Die Antriebseinrichtung kann so platzsparend realisiert werden. So kann auch die Messvorrichtung mit einer entsprechend geringeren Baugröße realisiert werden.

Ferner können erfindungsgemäße Antriebseinrichtungen einfach und wirtschaftlich hergestellt werden, sodass auch die gesamte Messvorrichtung einfacher und wirtschaftlicher realisierbar ist.

Vorteilhafterweise können mehrere Winkelmarken eine Maßverkörperung des wenigstens einen Drehwinkelgebers realisieren. Die Winkelmarken können dazu an definierten Stellen bezüglich der Drehachse umfangsmäßig verteilt am Läufer des Rotationsmotors angeordnet sein. Auf diese Weise können mehrere definierte Winkelstellungen des Läufers mit wenigstens einem entsprechenden Sensor erfasst werden. Alternativ oder zusätzlich können entsprechende Sensoren umfangsmäßig verteilt am Läufer angeordnet sein. Abhängig von der Anzahl der Winkelmarken kann eine Genauigkeit, insbesondere eine Auflösung, der Bestimmung der Winkelstellung vorgegeben werden.

Vorteilhafterweise kann wenigstens eine Winkelmarke eine Referenz-Winkelmarke sein. Mithilfe der Referenz-Winkelmarke kann eine Nullstellung des Läufers definiert und erkannt werden. Ausgehend von der Nullstellung können so mithilfe weiterer Winkelmarken entsprechende momentane Winkelstellungen des Läufers ermittelt werden.

Vorteilhafterweise kann wenigstens ein Spiegel an einem Rotor der Umlenkspiegelanordnung befestigt sein. Der Rotor kann mit dem Rotationsmotor um die Drehachse drehbar antreibbar sein. Der Rotor kann als Träger für den wenigstens einen Spiegel dienen. Der Rotor kann mit dem wenigstens einen Spiegel eine Spiegeleinheit bilden. Vorteilhafterweise können zwei Spiegel auf bezüglich der Drehachse gegenüberliegenden Seiten des Rotors angeordnet sein.

Der Rotor kann vorteilhafterweise an einem Rotorträger drehbar gelagert sein. Der Rotorträger kann ein bezüglich der Messvorrichtung stationäres Bauteil sein. Er kann insbesondere zumindest während des Betriebs nicht beweglich in einem Gehäuse der optischen Messvorrichtung angeordnet sein.

Vorteilhafterweise kann der Läufer des Rotationsmotors einen Verbindungsflansch aufweisen oder mit einem derartigen verbunden sein zum Verbinden mit wenigstens einen Spiegel, insbesondere mit wenigstens einem Rotor. Vorteilhafterweise kann der Verbindungsflansch an einer zur Drehachse koaxialen Motorachse des Rotationsmotors befestigt sein.

Die optische Messvorrichtung kann vorteilhafterweise Teil einer Fahrerassistenzeinrichtung sein. Die Signale der optischen Messvorrichtung können insbesondere zur Steuerung von Fahrfunktionen und/oder Signalisierungseinrichtungen des Fahrzeugs, insbesondere zur Steuerung der Lenkung, des Bremssystems und/oder des Motors, herangezogen werden.

Bei einer vorteilhaften Ausführungsform kann wenigstens eine Winkelmarke optisch, magnetisch und/oder mechanisch wirkend sein. Auf diese Weise kann die entsprechende Winkelstellung auf optischem, magnetischem und/oder mechanischem Wege erfasst werden. Vorteilhafterweise kann entsprechend wenigstens ein zur Erfassung der wenigstens einen Winkelmarke vorgesehener Sensor optisch, magnetisch und/oder mechanisch wirken.

Vorteilhafterweise kann wenigstens eine Winkelmarke als optische Markierung, insbesondere Strich, ausgestaltet sein. Optische Winkelmarken können berührungslos erfasst werden. Durch optische Winkelmarken werden keine magnetischen oder elektromagnetischen Felder erzeugt, welche sich störend auf die Funktion der Messvorrichtung auswirken können. Ferner können optische Winkelmarken einfach hergestellt werden. Eine entsprechende Maßverkörperung aus mehreren Winkelmarken kann als Strichmuster realisiert sein. Optische Markierungen können mithilfe wenigstens eines optischen Sensors erfasst werden.

Alternativ oder zusätzlich kann wenigstens eine Winkelmarke als Magnetisierung realisiert sein. Es können lokal magnetisierte Bereiche am Läufer vorgesehen sein. Entsprechend kann wenigstens ein Magnetfeldsensor zur Erfassung der wenigstens einen Winkelmarke vorgesehen sein.

Alternativ oder zusätzlich kann wenigstens eine Winkelmarke durch wenigstens einen mechanischen Kontakt und/oder einen mechanisch erfassbaren Bereich realisiert sein. Entsprechend kann wenigstens ein Tastsensor zur Erfassung der wenigstens einen Winkelmarke vorgesehen sein.

Bei einer weiteren vorteilhaften Ausführungsform kann wenigstens eine Winkelmarke auf/an einer oder als eine Codierscheibe realisiert sein. Die Codierscheibe kann einfach koaxial zur Drehachse am Läufer angeordnet, insbesondere drehfest befestigt, sein.

Vorteilhafterweise können auf der Codierscheibe mehrere Winkelmarken angeordnet sein. Auf diese Weise können die Winkeleinstellungen des Läufers und damit des wenigstens einen Spiegels in einer entsprechend großen Auflösung bestimmt werden.

Derartige Codierscheiben können auch als Winkel-Codierscheiben bezeichnet werden.

Bei einer weiteren vorteilhaften Ausführungsform kann der Läufer des Rotationsmotors einen bezüglich seiner Drehachse wenigstens radial verlaufenden Abschnitt zur Anordnung wenigstens einer Winkelmarke und/oder wenigstens eines Sensors aufweisen. Auf diese Weise kann die wenigstens eine Winkelmarke und/oder wenigstens ein Sensor bezüglich der Drehachse umfangsmäßig an dem Läufer angeordnet werden.

Vorteilhafterweise kann die wenigstens eine Winkelmarke und/oder der wenigstens eine Sensor als separates Bauteil, insbesondere auf/an einer Codierscheibe, mit dem Läufer verbunden werden. So kann die wenigstens eine Winkelmarke und/oder der wenigstens eine Sensor getrennt von dem Läufer, insbesondere dem Rotationsmotor, hergestellt werden. Die Bauteile können zu einem späteren Zeitpunkt miteinander verbunden werden. Alternativ oder zusätzlich kann wenigstens eine Winkelmarke und/oder wenigstens ein Sensor direkt an dem Läufer realisiert sein.

Vorteilhafterweise kann eine ringförmige Codierscheibe verwendet werden. Diese kann einfach in/an einem entsprechenden Abschnitt des Läufers angeordnet werden.

Vorteilhafterweise kann der Läufer einen bezüglich seiner Drehachse wenigstens teilumfänglichen Kragen aufweisen. An und/oder auf dem Kragen kann wenigstens eine Winkelmarke, insbesondere eine Codierscheibe, angeordnet werden.

Vorteilhafterweise kann wenigstens eine Winkelmarke und/oder wenigstens ein wenigstens eine Winkelmarke aufweisendes Bauteil, insbesondere eine Codierscheibe, mittels einer materialschlüssigen und/oder kraftschlüssigen und/oder formschlüssigen Verbindung, insbesondere einer Klebeverbindung, einer Schweißverbindung, einer Lötverbindung, einer Vulkanisation, einer Schraubverbindung, einer Steckverbindung, einer Pressverbindung, einer Rastverbindung und/oder einer Klemmverbindung oder dergleichen, mit dem Läufer verbunden sein. Die wenigstens eine Winkelmarke oder das wenigstens eine besagte Bauteil kann auf diese Weise einfach und/oder genau auf dem Läufer positioniert, insbesondere zentriert, und/oder befestigt werden.

Vorteilhafterweise kann ein die wenigstens eine Winkelmarke tragendes Bauteil, insbesondere eine Codierscheibe, aus einem transparenten Material, insbesondere optischem Glas oder Kunststoff, sein oder ein derartiges Material aufweisen. Die wenigstens eine Winkelmarke kann durch eine entsprechende optische Markierung realisiert sein. Optisches Glas oder Kunststoff kann einfach mittels einer Klebeverbindung mit dem Läufer verbunden werden. Alternativ zusätzlich kann ein die wenigstens eine Winkelmarke tragendes Bauteil wenigstens eine magnetisch wirkende Winkelmarke, insbesondere eine magnetische Codierscheibe, aufweisen. Derartige Bauteile können vorteilhafterweise durch Vulkanisation mit dem Läufer verbunden werden.

Bei einer weiteren vorteilhaften Ausführungsform kann wenigstens eine Winkelmarke und/oder wenigstens ein Sensor im Bereich einer bezüglich der Drehachse axialen Stirnseite des Läufers angeordnet sein. Auf diese Weise kann die wenigstens eine Winkelmarke platzsparend am Läufer angeordnet werden. Eine radiale Ausdehnung der Antriebseinrichtung kann so entsprechend gering gehalten werden.

Bei einer weiteren vorteilhaften Ausführungsform kann wenigstens ein Drehwinkelgeber auf einer Seite des Läufers angeordnet sein, welche von einer Verbindungsseite mit dem wenigstens einen Spiegel verschieden ist. Auf diese Weise können die beiden Verbindungen voneinander getrennt realisiert werden. Die Verbindung zwischen dem wenigstens einen Drehwinkelgeber und dem Läufer einerseits und die Verbindung zwischen dem Läufer und dem wenigstens einen Spiegel, insbesondere dem Rotor, können so freier gestaltet werden. Insbesondere bauteilbedingte und/oder betriebsbedingte Toleranzen können so besser und/oder einfacher kompensiert werden.

Vorteilhafterweise kann eine bezüglich der Drehachse axiale Stirnseite des Läufers dessen Verbindungsseite mit dem wenigstens einen Spiegel wenigstens mit bilden. Entsprechend kann die axial gegenüberliegende Seite des Läufers wenigstens eine Winkelmarke und/oder wenigstens einen Sensor aufweisen. Auf diese Weise ist auf der der Verbindungsseite mit dem wenigstens einen Spiegel, insbesondere dem Rotor, gegenüberliegenden Seite mehr Raum, um die stationären Teile des wenigstens einen Drehwinkelgebers anzuordnen.

Bei einer weiteren vorteilhaften Ausführungsform kann wenigstens ein Sensor und/oder wenigstens eine Winkelmarke an einem bezüglich der Messvorrichtung stationären Teil der Antriebseinrichtung angeordnet sein. Auf diese Weise kann wenigstens eine Paarung wenigstens eines stationären Sensors und wenigstens einer drehbaren Winkelmarke realisiert werden. Alternativ oder zusätzlich kann wenigstens eine Paarung wenigstens einer stationären Winkelmarke und wenigstens eines drehbaren Sensors realisiert werden.

Vorteilhafterweise kann wenigstens ein stationärer Sensor und/oder wenigstens eine stationäre Winkelmarke mit dem Stator des Rotationsmotors und/oder einer Halterung, insbesondere einem Befestigungsflansch, des Rotationsmotors an einem Rotorträger der Umlenkspiegelanordnung und/oder einem Gehäuse der Messvorrichtung mechanisch verbunden sein. Auf diese Weise kann die Antriebseinrichtung insgesamt kompakter aufgebaut sein.

Die Antriebseinrichtung kann vorteilhafterweise als modulares Bauteil realisiert werden, welches den Rotationsmotor und wenigstens einige, bevorzugt alle, Komponenten des wenigstens einen Drehwinkelgebers umfasst.

Bei einer weiteren vorteilhaften Ausführungsform kann der Rotationsmotor ein elektronisch kommutierter Motor sein. Ein elektronisch kommutierter Motor kann energetisch sparsam betrieben werden. Außerdem kann ein elektronisch kommutierter Motor mit einer verhältnismäßig genauen, insbesondere konstanten, Drehzahl betrieben werden.

Elektronisch kommutierte Motoren werden im Englischen als "Electronically commutated Motor" (EEC-Motor) bezeichnet. Als andere Bezeichnungen sind im englischen "Brushless direct current motor" (BLDC) oder BL-Motor und im Deutschen "bürstenloser Gleichstrommotor" gebräuchlich.

Alternativ kann statt eines elektronisch kommutierten Motors auch ein andersartiger elektrischer Rotationsmotor verwendet werden.

Vorteilhafterweise kann der Rotationsmotor mit gleich bleibender Drehrichtung und/oder konstanter Drehzahl betrieben werden.

Bei einer weiteren vorteilhaften Ausführungsform kann der Rotationsmotor ein Außenläufer sein. Bei einem Außenläufer befindet sich der Stator im Inneren des Rotationsmotors und ist vom bewegten Läufer umschlossen. Mit einem Außenläufer kann einfach ein elektronisch kommutierter Motor realisiert werden. Bei einem Außenläufer kann im Vergleich zu einem Innenläufer einfacher ein größeres Rotations-Trägheitsmoment realisiert werden. Ein größeres Rotations-Trägheitsmoment kann zu einem gleichmäßigeren Lauf des Rotationsmotors beitragen.

Alternativ kann der Rotationsmotor ein Innenläufer sein. Bei einem Innenläufer ist der Läufer innen und der Stator außen angeordnet.

Bei einer weiteren vorteilhaften Ausführungsform kann die Antriebseinrichtung eine elektronische Schaltung wenigstens eines Drehwinkelgebers oder für wenigstens einen Drehwinkelgeber aufweisen oder mit einer derartigen verbunden sein. Mit der elektronischen Schaltung können die Signale des wenigstens einen Drehwinkelgebers erfasst werden. Mit der elektronischen Schaltungen können Signale des Drehwinkelgebers in entsprechende elektrische/elektronische Signale umgewandelt werden, welche die Winkelstellung des Läufers und damit des wenigstens einen Spiegels charakterisieren können.

Vorteilhafterweise kann die Antriebseinrichtung wenigstens eine Leiterplatte, insbesondere ein sogenanntes Printed Circuit Board (PCB), aufweisen. Auf der Leiterplatte können entsprechende elektronische Schaltungen einfach und platzsparend realisiert sein.

Vorteilhafterweise kann auf wenigstens einer Leiterplatte wenigstens ein Sensor wenigstens eines Drehwinkelgebers angeordnet sein. Der wenigstens eine Sensor und wenigstens eine entsprechende elektronische Schaltung des wenigstens einen Drehwinkelgebers können als integriertes Bauteil realisiert sein.

Vorteilhafterweise kann wenigstens ein Sensor in eine Leiterplatte integriert sein. Auf diese Weise kann der wenigstens eine Sensor platzsparend mit der Leiterplatte gemeinsam realisiert sein. Die Leiterplatte mit dem wenigstens einen Sensor können als modulares Bauteil vorgefertigt werden.

Bei einer weiteren vorteilhaften Ausführungsform kann die optische Messvorrichtung ein Laserscanner sein. Der Laserscanner weist als Lichtquelle wenigstens einen Laser, insbesondere einen Diodenlaser, auf. Mit dem wenigstens einen Laser können insbesondere gepulste Sendestrahlen gesendet werden. Mit dem Laser können Sendestrahlen in für das menschliche Auge sichtbaren oder nicht sichtbaren Frequenzbereichen, insbesondere im Infrarot-Bereich, emittiert werden.

Die Aufgabe wird ferner erfindungsgemäß bei der optischen Messvorrichtung dadurch gelöst, dass wenigstens eine Winkelmarke und/oder wenigstens ein Sensor wenigstens eines Drehwinkelgebers an einem Läufer des Rotationsmotors angeordnet ist.

Die Aufgabe wird außerdem erfindungsgemäß bei dem Fahrerassistenzsystem dadurch gelöst, dass wenigstens eine Winkelmarke und/oder wenigstens ein Sensor wenigstens eines Drehwinkelgebers an einem Läufer des Rotationsmotors angeordnet ist.

Die Aufgabe wird des Weiteren erfindungsgemäß bei dem Verfahren dadurch gelöst, dass zum Ermitteln der Winkelstellung wenigstens eines Spiegels eine Winkelstellung des Läufers erfasst wird.

Im Übrigen gelten die im Zusammenhang mit der erfindungsgemäßen Antriebseinrichtung, der erfindungsgemäßen optischen Messvorrichtung, dem erfindungsgemäßen Fahrerassistenzsystem und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: ein Kraftfahrzeug mit einem Fahrerassistenzsystem, aufweisend einen Laserscanner zur Erfassung von Objekten oder Hindernissen in einem Überwachungsbereich vor dem Kraftfahrzeug;
- Figur 2: den Laserscanner des Kraftfahrzeugs aus der Figur 1;
- Figur 3: einen groben Schaltplan des Fahrerassistenzsystems des Kraftfahrzeugs aus der Figur 1;
- Figur 4: eine Umlenkspiegelanordnung des Laserscanners aus den Figuren 1 und 2;
- Figur 5: eine Explosionsdarstellung der Umlenkspiegelanordnung aus der Figur 4;
- Figur 6: eine Antriebseinrichtung der Umlenkspiegelanordnung aus den Figuren 4 und 5, mit einem elektrischen Rotationsmotor und einem Drehwinkelgeber;
- Figur 7: eine Seitenansicht der Antriebseinrichtung aus der Figur 6;
- Figur 8: eine Codierscheibe des Drehwinkelgebers der Antriebseinrichtung aus den Figuren 5 bis 7.

In den Figuren sind gleiche Bauteile mit gleichen Bezugszeichen versehen.

### Ausführungsform(en) der Erfindung

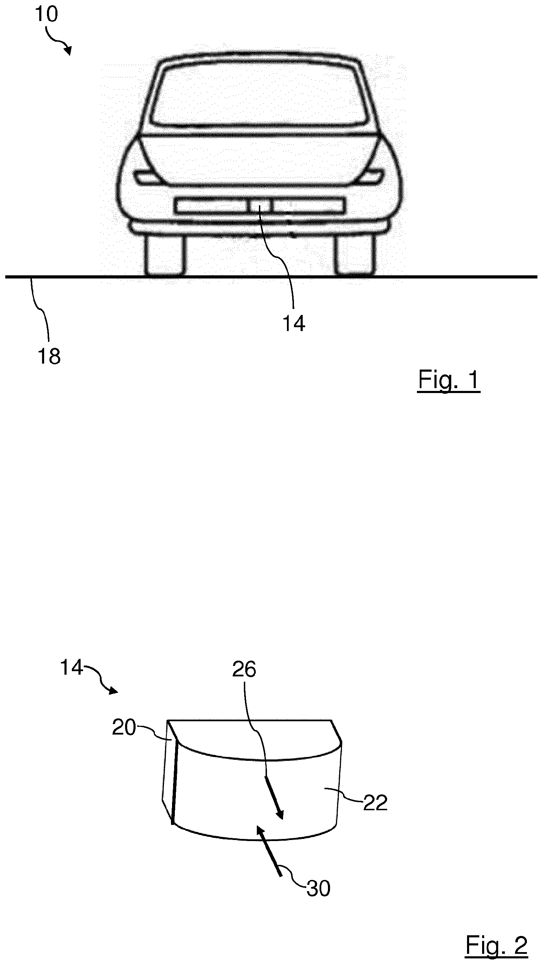

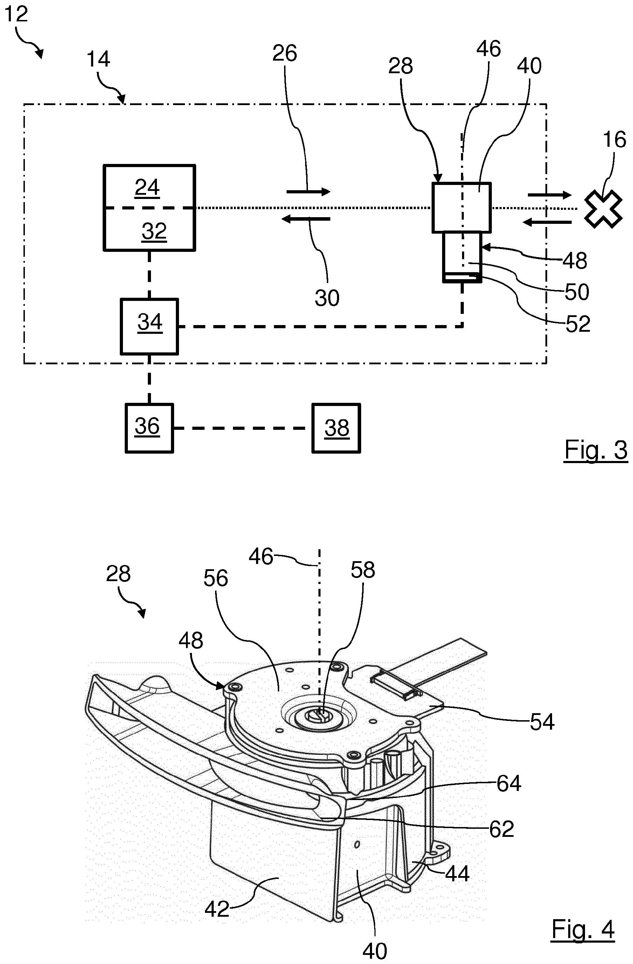

In der Figur 1 ist ein Kraftfahrzeug 10 in Form eines Personenkraftwagens gezeigt. Das Kraftfahrzeug 10 umfasst eine Fahrerassistenzeinrichtung 12, welche schematisch in der Figur 3 gezeigt ist. Die Fahrerassistenzeinrichtung 12 weist eine optische Messvorrichtung in Form eines Laserscanners 14 auf. Der Laserscanner 14 kann, wie in der Figur 1 beispielhaft gezeigt, in einem Kühlergrill des Kraftfahrzeugs 10 angeordnet sein. Mit dem Laserscanner 14 kann ein Überwachungsbereich in Fahrtrichtung vor dem Kraftfahrzeug 10 auf Objekte oder Hindernisse hin überwacht werden. Mit der Messvorrichtung 10 kann ein Abstand zu einem in der Figur 3 beispielhaft angedeuteten Objekt 16 oder einem Hindernis in dem Überwachungsbereich ermittelt werden. Die Abstandsbestimmung kann beispielsweise nach einem Lichtimpulslaufzeitverfahren erfolgen. Das Kraftfahrzeug 10 befindet sich auf einer Fahrebene 18, welche beispielhaft durch die Auflagestellen der Reifen definiert wird.

Der Laserscanner 14 verfügt über ein Gehäuse 20. An einer in der Figur 2 vorderen Seite weist das Gehäuse 20 ein Fenster 22 auf. Das Fenster 22 zeigt zu dem Überwachungsbereich. Durch das Fenster 22 werden von einer in der Figur 3 angedeuteten Sendereinheit 24 erzeugte gepulste Sendestrahlen 26 aus dem Gehäuse 20 heraus in den Überwachungsbereich gesendet. Von einem etwaigen Objekt 16 zurück reflektierte Sendestrahlen werden als Empfangsstrahlen 30 durch das Fenster 22 über die Umlenkspiegelanordnung 28 zu einer Empfangseinheit 32 des Laserscanners 14 gesendet.

Die Sendeeinheit 24 umfasst einen Diodenlaser, mit welchem gepulste Sendestrahlen 26, beispielsweise Infrarotstrahlen, ausgesendet werden. Ferner umfasst die Sendeeinheit 24 eine Sendeoptik, mit der die ausgesendeten Sendestrahlen 26 in Bezug auf ihre Richtung und ihren Öffnungswinkel verändert werden können.

Die Empfangseinheit 32 umfasst einen optischen Empfänger, mit dem die Empfangsstrahlen 30 empfangen und in elektrische Signale umgewandelt werden können. In Richtung der Empfangsstrahlen 30 vor dem optischen Empfänger ist eine Empfangsoptik angeordnet.

Die Sendeeinheit 24 und die Empfangseinheit 32 können beispielhaft als Sender-Empfänger-Einheit aufgebaut sein. Die Sendeeinheit 24 und die Empfangseinheit 32 sind über Signalleitungen, beispielsweise elektrische Leitungen, mit einer Steuerelektronik 34 des Laserscanners 14 verbunden. Die Signalleitungen sind in der Figur 3 gestrichelt angedeutet.

Der Laserscanner 14 ist über die Steuerelektronik 34 signaltechnisch mit einem Steuergerät 36 der Fahrerassistenzeinrichtung 12 des Kraftfahrzeugs 10 verbunden. Das Steuergerät 36 seinerseits ist signaltechnisch mit Fahr-Funktionssystemen des Kraftfahrzeugs, beispielsweise einer Lenkungssteuerung, einer Motorsteuerung und einem Bremssystem, verbunden. Beispielhaft ist in der Figur 3 eines der Funktionssysteme 38 angedeutet.

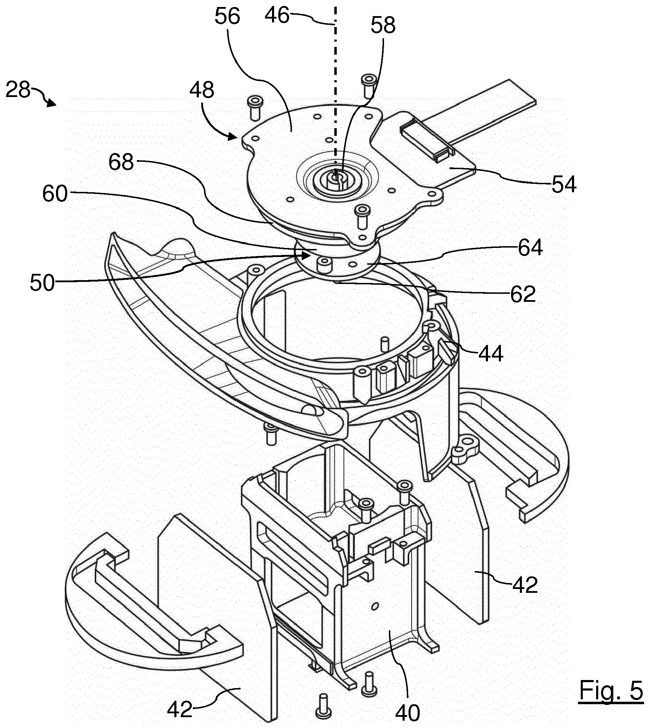

Die Umlenkspiegelanordnung 28 und deren Bauteile werden im Folgenden anhand der Figuren 4 bis 8 näher erläutert.

Die Umlenkspiegelanordnung 28 umfasst einen Rotor 40, an dem auf bezüglich einer gedachten Drehachse 46 radial gegenüberliegenden Seiten jeweils ein Spiegel 42 befestigt sind. Der Rotor 40 mit den Spiegeln 42 ist an einem Rotorträger 44 um die Drehachse 46 drehbar gelagert. Damit sind auch die Spiegel 42 um die Drehachse 46 drehbar. Der Rotorträger 44 ist drehfest im Gehäuse 20 angeordnet. So ist der Rotor 40 mit den Spiegel 42 relativ zu dem Gehäuse 20 um die Drehachse 46 drehbar. Der Rotorträger 44 bildet einen stationären Teil des Laserscanners 14.

Wenn im Folgenden von "radial", "koaxial", "axial", "umfangsmäßig" oder dergleichen die Rede ist, so bezieht sich dies, sofern nicht anders erwähnt, auf die Drehachse 46.

Die Drehachse 46 erstreckt sich in der normalen Montageposition des Laserscanners 14 senkrecht zur Fahrebene 18. Die Drehachse 46 befindet sich in Verlängerung einer Sendestrahlachse der Sendestrahlen 26 hinter der Sendeeinheit 24. Außerdem befindet sich die Drehachse 26 in einem Strahlengang der Empfangsstrahlen 30, sodass die Spiegel 42 von den Empfangsstrahlen 30 angestrahlt werden können. Durch Drehung des Rotors 40 und damit der Spiegel 42 werden die Sendestrahlen 26 in einer Ebene parallel zur Fahrebene 18 geschwenkt. Entsprechend wird ein Empfangsöffnungskegel auf der Empfängerseite ebenfalls parallel zur Fahrebene 18 geschwenkt. Auf diese Weise kann der Überwachungsbereich mit dem Sendestrahl 26 abgetastet werden.

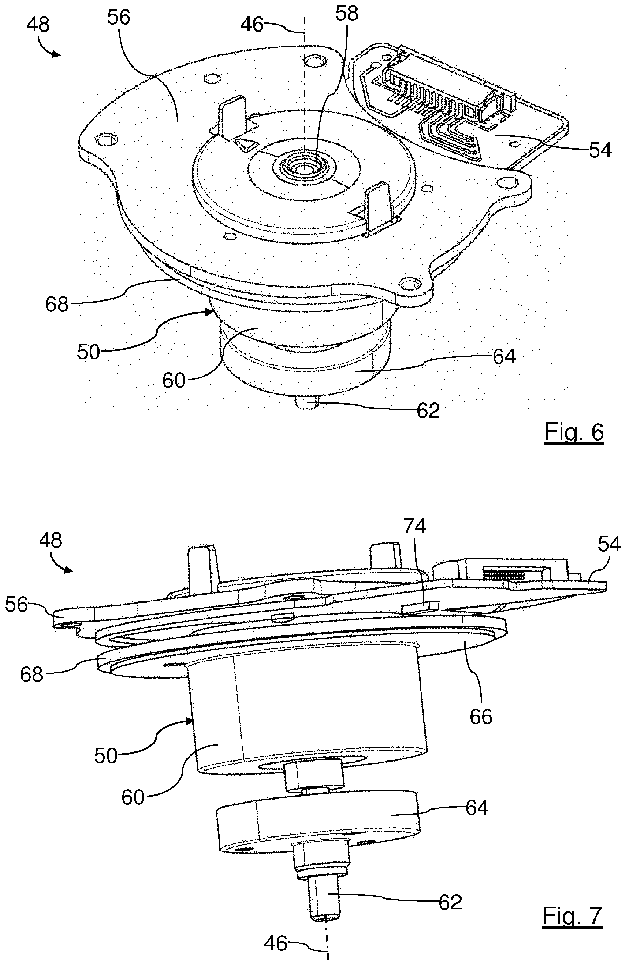

Die Umlenkspiegelanordnung 28 weist eine Antriebseinrichtung 48 zum Antreiben des Rotors 40 mit den Spiegeln 42 auf. Die Antriebseinrichtung 48 ist im Detail in den Figuren 6 und 7 gezeigt.

Die Antriebseinrichtung 48 verfügt über einen elektrischen Rotationsmotor 50 und einen Drehwinkelgeber 52 zur Bestimmung einer Winkelstellung des Rotors 40 mit den Spiegeln 42. Ferner verfügt die Antriebseinrichtung 48 über eine Leiterplatte 54 mit einer Steuerelektronik für den Rotationsmotor 50 und den Drehwinkelgeber 52. Die Leiterplatte 54 mit der Steuerelektronik ist über entsprechende Signal- und Steuerleitungen mit der Steuerelektronik 34 verbunden.

Des Weiteren umfasst die Antriebseinrichtung 48 einen Befestigungsflansch 56, mit dem die Antriebseinrichtung 48 an dem Rotorträger 44 beispielsweise mittels Schrauben befestigt ist.

Der Rotationsmotor 50 ist beispielhaft als sogenannter elektronisch kommutierter Motor ausgestaltet. Er wird im normalen Betrieb mit gleicher Drehrichtung und konstanter Drehgeschwindigkeit betrieben.

Der Rotationsmotor 50 ist als sogenannter Außenläufer ausgeführt. Er weist einen Stator 58 auf, welcher umfangsmäßig von einem Läufer 60 umgeben ist. Der Stator 58 ist drehfest an dem Befestigungsflansch 56 befestigt. Damit ist der Stator 58 bezüglich des Gehäuses 20 stationär. Der Läufer 60 ist koaxial um den Stator 58 drehbar gelagert.

Eine Motorachse 62 des Rotationsmotors 50 ist auf der dem Befestigungsflansch 56 axial abgewandten Seite mit dem Läufer 60 verbunden. Die Motorachse 62 ist koaxial zur Drehachse 46.

Auf der Motorachse 62 ist koaxial ein Verbindungsflansch 64 in Form einer runden Scheibe drehfest angeordnet. Mit dem Verbindungsflansch 64 ist der Rotorträger 44 beispielhaft mittels Schrauben drehfest verbunden. So kann der Rotorträger 44 mit den Spiegeln 42 mittels dem Läufer 60 drehbar angetrieben werden.

Im Bereich seiner dem Befestigungsflansch 56 axial zugewandten Stirnseite weist der Läufer 60 einen umfangsmäßigen Aufnahmekragen 66 auf. Der Aufnahmekragen 66 erstreckt sich umfangsmäßig und radial. Auf dem Aufnahmekragen 66 ist eine ringförmige Codierscheibe 68 des Drehwinkelgebers 52 koaxial befestigt. Die Codierscheibe 68 befindet sich auf der dem Befestigungsflansch 56 axial zugewandten Seite des Aufnahmekragens 66.

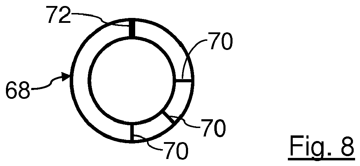

Bei der Codierscheibe 68 handelt es sich um eine optische Codierscheibe. Sie besteht aus transparentem Kunststoff. Sie verfügt über eine Maßverkörperung mit einer Mehrzahl von Winkelmarken 70 und 72. Eine der Winkelmarken ist eine ReferenzWinkelmarke 72. Die Referenz-Winkelmarke 72 und beispielhaft drei weitere Winkelmarken 70 sind in der Figur 8 angedeutet. Die Referenz-Winkelmarke 72 dient der Nullpunktbestimmung der Codierscheibe 68 und damit des Läufers 60. Die Winkelmarken 70 und 72 sind als lichtundurchlässige Striche auf der Codierscheibe 68 realisiert. Die Codierscheibe 68 ist auf den Aufnahmekragen 66 geklebt.

Axial zwischen der Codierscheibe 68 und dem Befestigungsflansch 65 ist die Leiterplatte 45 angeordnet und drehfest mit dem Befestigungsflansch 56 verbunden.

Auf der der Codierscheibe 68 axial zugewandten Seite ist auf der Leiterplatte 54 ein in der Figur 7 erkennbarer optischer Sensor 74 des Drehwinkelgebers 52 angeordnet. Der Sensor 74 ist geeignet, die Winkelmarken 70 und 72 zu erfassen, sobald diese ihm bei entsprechender Winkelstellung der Codierscheibe 68 gegenüberliegen. Der Sensor 74 ist in die Leiterplatte 54 integriert und mit der entsprechenden Steuerelektronik verbunden.

Mit dem Drehwinkelgeber 52 kann durch Erfassen der Winkelmarken 70 und der Referenz-Winkelmarke 72 mit dem Sensor 74 eine Winkelstellung des Läufers 60 und damit des Rotorträgers 44 mit den Spiegeln 42 relativ zur Drehachse 46 ermittelt werden. Die Winkelstellung wird über die Steuerelektronik der Leiterplatte 54 an die Steuerelektronik 34 des Laserscanners 14 übermittelt. Dort werden die Daten zur Winkelstellung mit den Abstandsdaten der Sendeeinheit 24 und der Empfangseinheit 32 verrechnet und so ein Abstand eines Objekts 16 und dessen winkelmäßige Position zum Laserscanner 14 ermittelt. Die Abstands- und Positionsdaten werden von der Steuerelektronik 34 an das Steuergerät 36 übermittelt. Mit diesem werden die Funktionssysteme 38 sprechend angesteuert und so die Fahrfunktion des Kraftfahrzeugs 10 entsprechend beeinflusst. Beispielsweise wird ein Bremsvorgang oder ein Lenkvorgang eingeleitet.

## Patentansprüche

1. Antriebseinrichtung (48) zum Antreiben wenigstens eines Spiegels (42) einer Umlenkspiegelanordnung (28) einer optischen Messvorrichtung (14) eines Fahrzeugs (10) um eine gedachte Drehachse (46) relativ zu einem stationären Teil der Messvorrichtung (14), wobei die Antriebseinrichtung (48) einen elektrischen Rotationsmotor (50) und wenigstens einen Drehwinkelgeber (52) zur Bestimmung wenigstens einer Winkelstellung des wenigstens einen Spiegels (42) bezüglich der Drehachse (46) aufweist, wobei der wenigstens eine Drehwinkelgeber (52) wenigstens eine Winkelmarke (70, 72) und wenigstens einen dazu passenden Sensor (74) aufweist, wobei die wenigstens eine Winkelmarke (70, 72) mit einem mit dem Rotationsmotor (50) drehbaren Teil (60) der Messvorrichtung (14) und der wenigstens eine Sensor (74) mit einem stationären Teil (44, 54, 56) der Messvorrichtung (14) verbunden ist oder umgekehrt, **dadurch gekennzeichnet, dass** wenigstens eine Winkelmarke (70, 72) und/oder wenigstens ein Sensor an einem Läufer (60) des Rotationsmotors (50) angeordnet ist.

2. Antriebseinrichtung nach Anspruch 1, **dadurch gekennzeichnet, dass** wenigstens eine Winkelmarke (70, 72) optisch, magnetisch und/oder mechanisch wirkend ist.

3. Antriebseinrichtung nach Anspruch 1 oder 2, **dadurch gekennzeichnet, dass** wenigstens eine Winkelmarke (70, 72) auf/an einer oder als eine Codierscheibe (68) realisiert ist.

4. Antriebseinrichtung nach einem der vorigen Ansprüche, **dadurch gekennzeichnet, dass** der Läufer (60) des Rotationsmotors (50) einen bezüglich seiner Drehachse (46) wenigstens radial verlaufenden Abschnitt (66) zur Anordnung wenigstens einer Winkelmarke (70, 72) und/oder wenigstens eines Sensors aufweist.

5. Antriebseinrichtung nach einem der vorigen Ansprüche, **dadurch gekennzeichnet, dass** wenigstens eine Winkelmarke (70, 72) und/oder wenigstens ein Sensor im Bereich einer bezüglich der Drehachse (46) axialen Stirnseite des Läufers (60) angeordnet ist.

6. Antriebseinrichtung nach einem der vorigen Ansprüche, **dadurch gekennzeichnet, dass** wenigstens ein Drehwinkelgeber (52) auf einer Seite des Läufers (60) angeordnet ist, welche von einer Verbindungsseite mit dem wenigstens einen Spiegel (42) verschieden ist.

7. Antriebseinrichtung nach einem der vorigen Ansprüche, **dadurch gekennzeichnet, dass** wenigstens ein Sensor (74) und/oder wenigstens eine Winkelmarke an einem bezüglich der Messvorrichtung (14) stationären Teil (54, 56) der Antriebseinrichtung (48) angeordnet ist.

8. Antriebseinrichtung nach einem der vorigen Ansprüche, **dadurch gekennzeichnet, dass** der Rotationsmotor (50) ein elektronisch kommutierter Motor ist.

9. Antriebseinrichtung nach einem der vorigen Ansprüche, **dadurch gekennzeichnet, dass** der Rotationsmotor (50) ein Außenläufer ist.

10. Antriebseinrichtung nach einem der vorigen Ansprüche, **dadurch gekennzeichnet, dass** die Antriebseinrichtung (48) eine elektronische Schaltung (54) wenigstens eines Drehwinkelgebers (52) oder für wenigstens einen Drehwinkelgeber (52) aufweist oder mit einer derartigen verbunden ist.

11. Antriebseinrichtung nach einem der vorigen Ansprüche, **dadurch gekennzeichnet, dass** die optische Messvorrichtung (14) ein Laserscanner ist.

12. Optische Messvorrichtung (14) eines Fahrzeugs (10) mit wenigstens einer Antriebseinrichtung (48) zum Antreiben wenigstens eines Spiegels (42) einer Umlenkspiegelanordnung (28) der Messvorrichtung (14) um eine gedachte Drehachse (46) relativ zu einem stationären Teil (44, 54, 56) der Messvorrichtung (14), wobei die Antriebseinrichtung (48) einen elektrischen Rotationsmotor (50) und wenigstens einen Drehwinkelgeber (52) zur Bestimmung wenigstens einer Winkelstellung des wenigstens einen Spiegels (42) bezüglich der Drehachse (46) aufweist, wobei der wenigstens eine Drehwinkelgeber (52) wenigstens eine Winkelmarke (70, 72) und wenigstens einen dazu passenden Sensor (74) aufweist, wobei die wenigstens eine Winkelmarke (70, 72) mit einem mit dem Rotationsmotor (50) drehbaren Teil (60) der Messvorrichtung (14) und der wenigstens eine Sensor (74) mit einem stationären Teil (54) der Messvorrichtung (14) verbunden ist oder umgekehrt, **dadurch gekennzeichnet, dass** wenigstens eine Winkelmarke (70, 72) und/oder wenigstens ein Sensor wenigstens eines Drehwinkelgebers (52) an einem Läufer (60) des Rotationsmotors (50) angeordnet ist.

13. Fahrerassistenzsystem (12) eines Fahrzeugs (10), mit wenigstens einer optischen Messvorrichtung (14) und wenigstens einer Steuereinrichtung (36) zum Steuern wenigstens eines Fahr-Funktionssystems (38) des Fahrzeugs (10) abhängig wenigstens von Informationen der wenigstens einen Messvorrichtung (14), wobei die wenigstens eine Messvorrichtung (14) wenigstens eine Antriebseinrichtung (48) zum Antreiben wenigstens eines Spiegels (42) einer Umlenkspiegelanordnung (28) der Messvorrichtung (14) um eine gedachte Drehachse (46) relativ zu einem stationären Teil (44, 54, 56) der Messvorrichtung (14) aufweist, wobei die Antriebseinrichtung (48) einen elektrischen Rotationsmotor (50) und wenigstens einen Drehwinkelgeber (52) zur Bestimmung wenigstens einer Winkelstellung des wenigstens einen Spiegels (42) bezüglich der Drehachse (46) aufweist, wobei der wenigstens eine Drehwinkelgeber (52) wenigstens eine Winkelmarke (70, 72) und wenigstens einen dazu passenden Sensor (74) aufweist, wobei die wenigstens eine Winkelmarke (70, 72) mit einem mit dem Rotationsmotor (50) drehbaren Teil (60, der Messvorrichtung (14) und der wenigstens eine Sensor (74) mit einem stationären Teil (54) der Messvorrichtung (14) verbunden ist oder umgekehrt, **dadurch gekennzeichnet, dass** wenigstens eine Winkelmarke (70, 72) und/oder wenigstens ein Sensor wenigstens eines Drehwinkelgebers (52) an einem Läufer (60) des Rotationsmotors (50) angeordnet ist.

14. Verfahren zum Betreiben einer optischen Messvorrichtung (14) eines Fahrzeugs (10), bei dem mit wenigstens einem Sender (24) wenigstens ein Sendestrahl (26) über wenigstens einen Spiegel (42) einer Umlenkspiegelanordnung (28) in einen Überwachungsbereich der Messvorrichtung (14) gesendet wird, wenigstens ein Sendestrahl (26) von einem in dem Überwachungsbereich befindlichen Objekt (16) oder Hindernis reflektiert und als wenigstens ein Empfangsstrahl (30) über denselben oder wenigstens einen anderen Spiegel (42) der Umlenkspiegelanordnung (28) zu einem Empfänger (32) gesendet wird, wobei vor, während und/oder nach dem Senden des wenigstens einen Sendestrahls (26) und/oder nach dem Empfangen wenigstens einen Empfangsstrahls (30) wenigstens einer der Spiegel (42) mittels einem Läufer (60) eines Rotationsmotors (50) um eine gedachte Drehachse (46) relativ zu einem stationären Teil (44, 54, 56) der Messvorrichtung (14) gedreht wird und vor, nach und/oder während dem Drehvorgang mit wenigstens einem Drehwinkelgeber (52) wenigstens eine Winkelstellung des wenigstens einen Spiegels (42) bezüglich der Drehachse (46) ermittelt wird, **dadurch gekennzeichnet, dass** zum Ermitteln der Winkelstellung wenigstens eines Spiegels (42) eine Winkelstellung des Läufers (60) erfasst wird.
